# EUROPEAN PATENT SPECIFICATION

(11) **EP 3 417 343 B1**
(45) Date of publication and mention of the grant of the patent: **12.02.2020**
(21) Application number: 17704788.3
(22) Date of filing: 17.02.2017
(51) Int. Cl.: G02F 1/1345

(54) **PDLC SHUTTER DEVICE WITH PATTERNED ELECTRODES**
PDLC BLENDEVORRICHTUNG MIT GEMUSTERTEN ELEKTRODEN
DISPOSITIF D'OBTURATION PDLC COMPRENANT DES ELECTRODES STRUCTUREES.

(30) Priority: 19.02.2016 EP 16382068
(43) Date of publication of application: 26.12.2018
(73) Proprietor: Intercomet S.L., 28860 Paracuellos del Jarama-Madrid (ES)
(72) Inventor: MESHKAT MAMALEK, Mojtaba, 28860 Paracuellos del Jarama Madrid (ES); FEIXAS ZAPLANA, Bernat, 08912 Badalona (ES)
(74) Representative: ABG Intellectual Property Law, S.L.
(86) International application number: PCT/EP2017/053578
(87) International publication number: WO 2017/140827

(56) References cited:
- KR-A- 20140 023 796
- KR-A- 20150 097 327
- US-A1- 2004 160 388
- US-A1- 2006 262 246
- US-A1- 2010 277 448

## Description

### FIELD OF THE INVENTION

The present invention relates to the field of liquid crystals technologies and, more particularly, to the field of polymer dispersed liquid crystal (PDLC) light shutter devices.

### BACKGROUND

Smart glass is glass or glazing whose light transmission properties are altered when voltage, light or heat is applied. Generally, the glass changes from transparent to translucent or opaque, changing from blocking some (or all) wavelengths of light to pass through. Smart glass technologies include electro-chromic, photo-chromic, thermo-chromic, suspended particle, micro-blind and polymer dispersed liquid crystal (PDLC) devices.

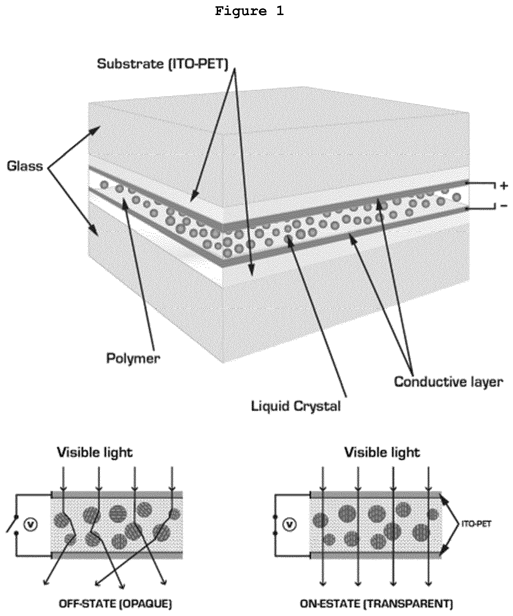

In a PDLC device, liquid crystals are dissolved or dispersed into a liquid polymer followed by solidification or curing of the polymer. During the change of the polymer from a liquid to solid (curing), the liquid crystals, being incompatible with the polymer, form droplets throughout the solid polymer. The resulting cured mixture is encapsulated between two layers of conductive transparent films, normally ITO on PET substrate, to produce a PDLC film. This PDLC film is then cut to the required size and after being connected with electrodes is laminated between glass panels forming a PDLC (smart) glass device (see Figure 1). When the electrodes of PDLC film are not connected to any electrical supply source, the liquid crystal are positioned randomly in the droplets, resulting in scattering of light passing through the PDLC glass. This results in a translucent (commonly called opaque) state (OFF-state). When a voltage is applied to the electrodes, the electric field formed between the two transparent conductive layers excites the liquid crystal particles to align, allowing light to pass through the droplets with very little scattering and resulting in a transparent appearance (ON-state).

In addition, when only one of the conductive layers of the PDLC film is etched in parallel lines, some strips are produced (wherein a strip is formed by the area between two parallel etched lines). Then if any strip is individually connected to power supply, it becomes transparent when the other conductive (non-etched) layer is also electrically charged. This device is called PDLC shutter.

The conventional PDLC shutters in the market works either longitudinally or transversally. This is due to the fact that, as described for example in KR 20140024643 A1, it comprises only one etched conductive film, either transversally or longitudinally in some strips without the other conductive film being etched. Then by supplying electrical charge to the non-etched film and to some strips of the etched film, the strips with electrical charge become transparent while the other parts without electrical charge remain translucent, producing either vertical or horizontal shutters. Also known prior art documents concerning PDLC devices are KR20140023796A, US2004/160388A1, US2006/262246A1, US2010277448A1 and KR20150097327A.

Therefore, there is a need for developing PDLC shutter devices able to convert both transversally and longitudinally resulting in unlimited possible patterns at the choice of the user.

### SUMMARY OF THE INVENTION

The author of the present invention has developed a transversally and longitudinally convertible PDLC shutter device comprising two etched conductive films, one conductive film being etched longitudinally and the other transversally, and controlled by modular printed circuit boards (PCBs) and a control console generating unlimited designs and shapes at the choice of the user.

Accordingly, in a first aspect, the invention is directed to a longitudinally or transversally convertible PDLC shutter device as defined in claim 1 and comprising inter alia:
i) a PDLC film comprising
   - a longitudinally etched conductive film and a transversally etched conductive film disposed substantially parallel to each other, and
   - a PDLC located between the longitudinally etched conductive film and the transversally etched conductive film;
ii) at least one longitudinal modular circuit (10) comprising
   - at least one conductive output-pad (11) connected each one to the wire mesh of a conductive bus-bar (12) of one strip, wherein a strip is the area located between two etched lines of the longitudinally etched conductive film of the PDLC film, and
   - at least one initial connector (13) and at least one terminal connector (14);
iii) at least one transversal modular circuit (15) comprising
   - at least one conductive output-pad (11) connected each one to the wire mesh of a conductive bus-bar (12) of one strip, wherein a strip is the area located between two etched lines of the transversally etched conductive film of the PDLC film, and
   - at least one initial connector (13)and at least one terminal connector (14);
iv) at least one pivot modular circuit (16) comprising
   - at least one initial connector and at least one terminal connector at each longitudinal and transversal directions to connect longitudinal to transversal modular circuits;
v) at least one end terminal modular circuit (22) connected to the last of the at least one longitudinal modular circuit (10) or to the last of the at least one transversal modular circuit (15);
vi) at least one power supply terminal (17) and at least one data terminal (18), both connected to the end terminal modular circuit (22); and
vii) an electronic controller console to operate the longitudinally and transversally convertible PDLC shutter device, comprising
   - one power supply cable (20) connected to the power supply terminal (17), and
   - one data cable (21) connected to the data terminal (18) .

Another aspect of the invention is directed to a PDLC shutter rigid transparent substrate device comprising:
i) a PDLC shutter as define above;
ii) rigid transparent substrate disposed substantially parallel over the longitudinally etched conductive film of the PDLC film and/or a rigid transparent substrate disposed substantially parallel over the transversally etched conductive film of the PDLC film; and
iii) a transparent polymer binder.

Finally, another aspect of the invention is directed to the use of the PDLC shutter glass device as defined above for interior and exterior glazing.

### FIGURES

Figure 1: Diagram of a PDLC glass device.
Figure 2: Schematic view of transversal (top) and longitudinal (down) connections embodied by the present invention.
Figure 3: Schematic view of a longitudinally and transversally convertible PDLC shutter device embodied by the present invention.
Figure 4: Schematic view of a modular circuit embodied by the present invention.
Figure 5: Examples of patterns produced by the longitudinally and transversally convertible PDLC shutter device of the invention, wherein: (A) to (L) are patterns based on longitudinal or transversal strips, and (M) to (R) are checkered patterns based on a simultaneous combinations of longitudinal and transversal strips.

### DETAILED DESCRIPTION OF THE INVENTION

Unless defined otherwise, all technical and scientific terms used herein have the same meaning as commonly understood to one of ordinary skill in the art to which this disclosure belongs.

The present invention is directed to a longitudinally and transversally convertible PDLC shutter device as defined in claim 1 and comprising inter alia:
i) a PDLC film comprising
   - a longitudinally etched conductive film and a transversally etched conductive film disposed substantially parallel to each other, and
   - a PDLC located between the longitudinally etched conductive film and the transversally etched conductive film;
ii) at least one longitudinal modular circuit (10) comprising
   - at least one conductive output-pad (11) connected each one to the wire mesh of a conductive bus-bar (12) of one strip, wherein a strip is the area located between two etched lines of the longitudinally etched conductive film of the PDLC film, and
   - at least one initial connector (13) and at least one terminal connector (14);
ii) at least one transversal modular circuit (15) comprising
   - at least one conductive output-pad (11) connected each one to the wire mesh of a conductive bus-bar (12) of one strip, wherein a strip is the area located between two etched lines of the transversally etched conductive film of the PDLC film, and
   - at least one initial connector (13) and at least one terminal connector (14);
iii) at least one pivot modular circuit (16) comprising
   - at least one initial connector and at least one terminal connector at each longitudinal and transversal directions to connect longitudinal to transversal modular circuits;
v) at least one end terminal modular circuit (22) connected to the last of the at least one longitudinal modular circuit (10) or to the last of the at least one transversal modular circuit (15) ;
vi) at least one power supply terminal (17) and at least one data terminal (18), both connected to the end terminal modular circuit (22); and
vii) an electronic controller console (19) to operate the longitudinally and transversally convertible PDLC shutter device, comprising one power supply cable (20) connected to the power supply terminal (17) and one data cable (21) connected to the data terminal (18).

Thus, the longitudinally and transversally convertible PDLC shutter device of the present invention comprises a PDLC film comprising a longitudinally etched conductive film and a transversally etched conductive film disposed substantially parallel to each other.

In the context of the present invention, the term "conductive film" refers to a flexible transparent film (substrate) with a conductive layer deposited over one side of it.

Therefore, in a particular embodiment, the longitudinally and transversally conductive films of the present invention are independently formed by a conductive layer with a thickness between around 50 nm to around 5 µm deposited over one side of a flexible transparent substrate with a thickness between around 100 µm to around 200 µm.

Non-limitative examples of conductive layers suitable for the present invention are those made of indium tin oxide (ITO), silver nanowires (AgNW), silver nanorings (AgNR), graphene, PEDOT:PSS, carbon nanotubes (CNT), metal oxides or combinations thereof. A non-limitative example of a transparent substrate suitable for the present invention is polyethylene terephthalate (PET), polyethylene naphthalate (PEN) and hard coated polyester.

In a preferred embodiment, the longitudinally etched conductive film of the PDLC film is equal to or more than 1.5 m wide and equal to or more than 200 m long, preferably the longitudinally etched conductive film is 1.5 m wide and 250 m long.

In another preferred embodiment, the transversally etched conductive film of the PDLC film is equal to or more than 1.5 m wide and equal to or more than 200 m long, preferably the transversally etched conductive film is 1.5 m wide and 250 m long. In a particular embodiment, the longitudinally and transversally etched conductive films of the present invention are etched in an etching machine configured to etch a conductive film in continuous manner by laser etching or by mechanical etching.

The PDLC film of the longitudinally and transversally convertible PDLC shutter device of the present invention comprises a PDLC located between the longitudinally etched conductive film and the transversally etched conductive film.

The PDLC is cured between the longitudinally etched conductive film and the transversally etched conductive film of the invention.

In a preferred embodiment, the PDLC of the PDLC film of the invention is nematic.

In a preferred embodiment, the PDLC of the PDLC film of the invention is stabilized by Polymerization Induced Phase Separation (PIPS).

In another particular embodiment, the PDLC film of the invention has a thickness between around 120 µm to around 500 µm. Thus, the longitudinally and transversally convertible PDLC shutter device of the present invention further comprises at least one longitudinal modular circuit (10) comprising at least one conductive output-pad (11) connected each one to the wire mesh of a conductive bus-bar (12) of one strip, wherein a strip is the area located between two etched lines of the longitudinally etched conductive film of the PDLC film, and at least one initial connector (13) and at least one terminal connector (14).

In the context of the present invention, the "initial connector" and the "terminal connector" refer to female and male connectors, respectively. These connectors allow connecting two consecutive modular circuits, connecting one modular circuit to one pivot modular circuit (16) or connecting one modular circuit to the terminal modular circuit (22).

Thus, the longitudinally and transversally convertible PDLC shutter device of the present invention comprises at least one pivot modular circuit (16) comprising at least one initial connector and at least one terminal connector at each longitudinal and transversal directions to connect longitudinal to transversal modular circuits; and at least one end terminal modular circuit (22) connected to the last of the at least one longitudinal modular circuit (10) or to the last of the at least one transversal modular circuit (15).

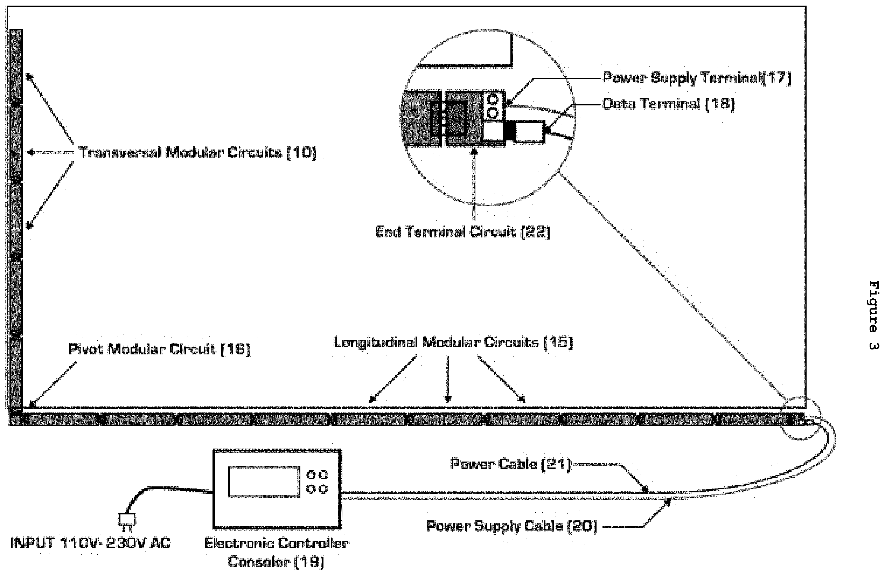

Longitudinal modular circuits (10) and transversal modular circuits (15) as defined above receive power supply and data through the last of the at least one longitudinal modular circuit (Figure 3). Therefore, the longitudinally and transversally convertible PDLC shutter device as defined above has at least one power supply terminal (17) and at least one data terminal (18), both connected to the last of the at least one longitudinal modular circuit which provide power and data to the rest of longitudinal and transversal modular circuits.

In the longitudinally and transversally convertible PDLC shutter device of the present invention, the at least one longitudinal modular circuit (10) or the at least one transversal modular circuit (15) comprising both at least one conductive output-pad (11) connected each one to the wire mesh of a conductive bus-bar (12) of one strip, wherein a strip is the area located between two etched lines of the longitudinally or transversally etched conductive film of the PDLC film. Then, by applying electrical power, the polarity of the PDLC of the strips is changed, in contrast with the strips in absent of electrical power.

Since both conductive films are etched, one transversally etched and another longitudinally etched, the longitudinally and transversally convertible PDLC shutter device of the invention works differently than the conventional shutters which have only one etched conductive film. Conventional PDLC shutters are operated by only one alternating current (AC) electrode connected to the non-etched conductive film and another AC electrode connected to the strips of the etched conductive film. Then by applying electrical charge to any strip, it becomes transparent while the other strips in absence of electrical charges remain in OFF-STATE.

The convertible PDLC shutter device of the present invention works differently as the AC power in square-wave is connected to all longitudinal and transversal strips. Therefore, for the present invention, the transparency or opacity occurs in each intersection of the strips. Each intersection of a longitudinal strip with a transversal strip becomes transparent when one strip is charged with maximum (1) and the other with minimum (0) of the square-wave; otherwise the intersection remains in OFF-STATE. For this reason the transversal shutter can produce checkered patterns as well as vertical and horizontal strips when all adjacent intersections are in ON-STATE or OFF-STATE.

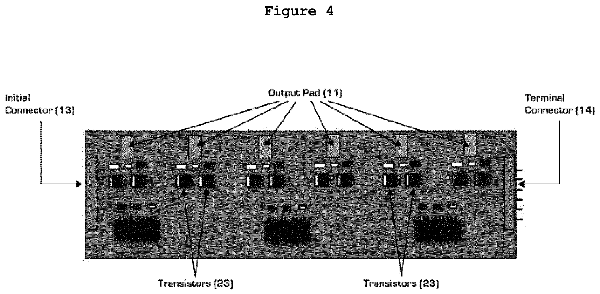

Therefore, for the purpose of controlling each intersection, the longitudinally and transversally convertible PDLC shutter device of the present invention further comprises longitudinal and transversal modular circuits (Figure 4) and an electronic controller console (19) (Figure 3) allowing to apply controlled electrical charges to each intersection of the two conductive films either equal phases in OFF-STATE or unequal phases in ON-STATE. The control console functions are editing patterns, saving patterns, recalling patterns, controlling time and sequence between patterns by setting the sequence of ON/OFF and passing the data to the modular circuits. In addition, the electronic controller console (19) allows producing patterns in static and/or in motion.

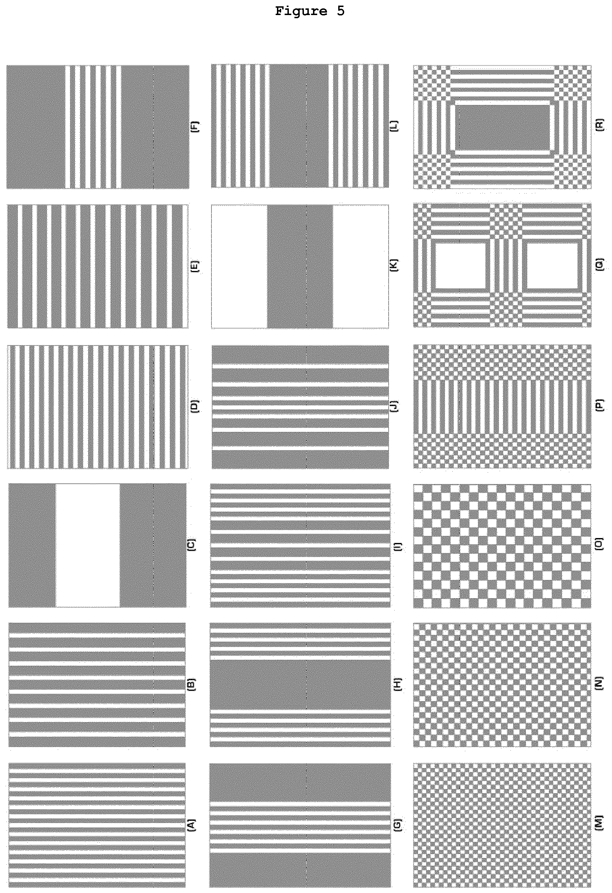

As non-limitative examples, Figure 5 shows in (A) to (L) straight patterns and in (M) to (R) checkered patterns which can be produced by the longitudinally and transversally convertible PDLC shutter device of the invention.

In a particular embodiment, the electronic controller console (19) of the longitudinally and transversally convertible PDLC shutter device of the invention further comprises a Bluetooth system. This allows to the user controlling the electronic controller console (19) by means of any Bluetooth supporting electronic device such as a mobile or a tablet.

Another aspect of the invention is directed to a PDLC shutter rigid transparent substrate device comprising:
i) a PDLC shutter as define above;
ii) a rigid transparent substrate disposed substantially parallel over the longitudinally etched conductive film of the PDLC film and/or a rigid transparent substrate disposed substantially parallel over the transversally etched conductive film of the PDLC film; and
iii) a transparent polymer binder.

In a preferred embodiment, the rigid transparent substrate of the PDLC shutter device of the present invention is glass.

In a preferred embodiment, the polymer binder of the PDLC shutter device of the present invention is a hot-melt film, preferably selected from the group consisting of ethylene vinyl acetate (EVA), polyvinyl butyral (PVB), polyurethane (PU) or liquid resins.

Finally, another aspect of the invention is directed to the use of the PDLC shutter rigid transparent substrate device as defined above for interior and exterior glazing.

### EXAMPLES

The present invention will now be described by way of examples which serve to illustrate the construction and testing of illustrative embodiments. However, it is understood that the present invention is not limited in any way to the examples below.

### Example 1: Production of a PDLC film of 1.5 m wide and 250 m long.

One longitudinally etched conductive film and one transversally etched conductive film were loaded on PDLC laminating machine so that the conductive layers rolled face to face with the PDLC inserted in between. When the PDLC was cured, a composite film (PDLC film) was produced.

### Example 2: Production of a longitudinally and transversally convertible PDLC shutter glass device of 1.5 m wide and 3 m long.

The PDLC film obtained in example 1 was cut to a sheet of 1.5 m wide x 3 m long. Then, a strip of about 0.005 m was cut at the top border of the longitudinal etched conductive film of the PDLC film and the exposed PDLC material was wiped out carefully not to damage to the conductive layer of transversal film, in order to have access to the conductive layers of transversal strips of the transversally etched conductive film. Similarly, a strip of about 0.005 m was cut at the one border of the transversally etched conductive film and the PDLC film was wiped out carefully not to damage to the conductive layer of longitudinally etched conductive film, in order to expose to the conductive layers of longitudinal strips of the longitudinally etched conductive film. The exposed strips (transversal and longitudinal) were cleaned by using acetone and special soft cloth and conductive bus-bars (12) were connected individually to each strip as a total of 30 conductive bus-bars (12) for longitudinal strips and a total of 60 conductive bus-bars (12) for transversal strips. Then we connected a fine copper wire mesh of about 1cm x 5cm to each conductive bus-bar (12) to be connected afterwards to the conductive output-pad (11) of modular circuits ((10) and (15)).

Then, one glass pane bigger than the PDLC film, in order to position the modular circuits ((10) and (15)) at one length and one width was located on a table horizontally. Then hot-melt adhesive film was laid over the glass pane. Then the PDLC film was laid over the hot-melt adhesive film. Then another hot-melt adhesive film was added over the PDLC film and finally a glass pane of the same size as the PDLC film was laid over the second hot-melt adhesive film while in all process the hot-melt films and PDLC are located in such a way that leave an empty space to install modular circuit after lamination with conductive bus-bars (12) located and protected in the empty space. Then the borders were closed with porous adhesive film ready for vacuuming and lamination. Then, the resulting PDLC shutter glass was placed into a vacuum bag and put in oven or autoclave to laminate it at the temperature of about 120°C for few hours.

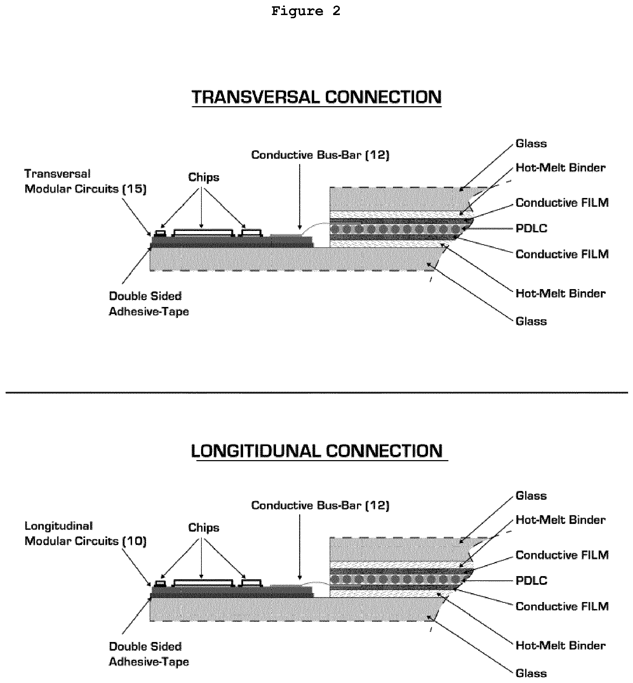

After removing the composite PDLC shutter glass from the oven or autoclave, 5 modular circuits (10) were installed on longitudinal and 10 modular circuits on transversal (15). Each modular circuit had 6 conductive output-pads (11) and each conductive output-pad was connected to fine copper meshes of PDLC strips. All conductive output-pads (11) of the modular circuits installed at length of the shutter were connected to the transversal strips of one conductive film (Figure 2) and all conductive output-pads of the modular circuits at width of the shutter are connected to the longitudinal strips of the other conductive film (Figure 2).

The modular circuits (Figure 4) were located at a predetermined length of 0.3 m and interconnected together according to the dimensions of the shutter in multiples of 300 mm and placed only at one length and one width of the shutter. In particular, 5 modular circuits (15) were located in transversal and 10 modular circuits were located in longitudinal (10) producing a shutter of 1.5 m x 3 m with strips of 0.05 m.

A pivot modular circuit (16) was located to connect or disconnect the longitudinal and transversal modular circuits (Figure 3). At the end of longitudinal modular circuits (10), there was a power supply terminal (17) and Registered Jack (RJ45) which is a data terminal (18). A bi-polar power supply cable (20) from electronic controller console (19) was connected to the power supply terminal (17) and CAT-5 data cable (21) was connected RJ45 (18) (Figure 3) to provide power supply and data to each strips though the conductive output-pads (11) of modular circuits. For each conductive output-pad (11), there were two transistors (23) to control the power supply and data to each strip through the conductive output-pad (11). The direction of the output signal was controlled by these two transistors (23) acting as closing or opening gates for each type of output. Depending on which type of output was configured in the electronic controller console (19), one or the other transistor (23) was activated. The position of each output was registered by each modular circuit by the shift registers. The modular circuits were connected in 3 main lines of data, store and clock. Combining clock and data, the configured list of bits were sent for a pre-fixed pattern set in the console. In another words, for producing transparent intersection of the longitudinal and transversal, the intersections were charged by different phases (1, 0) or (0, 1). However, by applying equal phases, or equal values (0, 0) or (1, 1) in both strips, the intersection remained opaque.

When all adjacent intersections of the rows and the columns received equal value, opaque strips were obtained, and when all adjacent intersections of the rows and the columns received different value, transparent strips were obtained (Figure 5, A-L). When some intersections were charged with equal value and others not, checkered patterns were obtained (Figure 5, M-R).

The electronic controller console (19) supplied power and signal to 90 strips (although it had capacity to feed 256 strips) through the modular circuits only by two power and data cables (Figure 3). Therefore, if the strips of horizontal and vertical were 0.05 m wide, the console controls a jumbo shutter of 5 m x 7.8 m (total 39 m²).

## Claims

1. A polymer dispersed liquid crystal, PDLC, shutter device comprising:
i) a PDLC film comprising
- a longitudinally etched conductive film and a transversally etched conductive film disposed substantially parallel to each other, and
- a PDLC located between the longitudinally etched conductive film and the transversally etched conductive film;
ii)at least one longitudinal modular circuit (10) comprising
- at least one conductive output-pad (11) connected each one to two transistors (23) wherein the at least one conductive output-pad (11) is connected, by a wire mesh, to a respective conductive bus-bar (12) connected to each strip and wherein the at least one conductive output-pad (11) is connected individually to each strip, wherein a strip is the area located between two etched lines of the longitudinally etched conductive film of the PDLC film; and
- at least one initial connector (13) and at least one terminal connector (14);
iii) at least one transversal modular circuit (15) comprising
- at least one conductive output-pad (11) connected each one to two transistors (23) wherein the at least one conductive output-pad (11) is connected, by a wire mesh, to a respective conductive bus-bar (12) connected to each strip and wherein the at least one conductive output-pad (11) is connected individually to each strip, wherein a strip is the area located between two etched lines of the transversally etched conductive film of the PDLC film, and wherein the transistors (23) are adapted to control the power supply and data supplied to each strip through the conductive output-pad (11);
- at least one initial connector (13), and at least one terminal connector (14);
iv) at least one pivot modular circuit (16) comprising
- at least one initial connector and at least one terminal connector configured to connect longitudinal to transversal modular circuits;
v) at least one end terminal modular circuit (22) connected to the last of the at least one longitudinal modular circuit (10) or to the last of the at least one transversal modular circuit (15);
vi) at least one power supply terminal (17) and at least one data terminal (18), both connected to the end terminal modular circuit (22);
vii) an electronic controller console (19) to operate the longitudinally and transversally convertible PDLC shutter device, comprising
- one power supply cable (20) connected to the power supply terminal (17), and
- one data cable (21) connected to the data terminal (18); and
wherein the PDLC shutter is capable of generating opacity or transparency at each intersection of the strips.

2. A PDLC shutter device according to claim 1, wherein the PDLC is nematic.

3. A PDLC shutter device according to any of claims 1 to 2, wherein the longitudinally etched conductive film is equal to or more than 2m wide and equal to or more than 200 m long.

4. A PDLC shutter device according to any of claims 1 to 3, wherein the transversally etched conductive film is equal to or more than 2 m wide and equal to or more than 200 m long.

5. A PDLC shutter device according to any of claims 1 to 4, wherein the electronic controller console (19) further comprises a Bluetooth system.

6. A PDLC shutter rigid transparent substrate device comprising:
i) a PDLC shutter device according to any of claims 1 to 5;
ii) a rigid transparent substrate disposed substantially parallel over the longitudinally etched conductive film of the PDLC film and/or a rigid transparent substrate disposed substantially parallel over the transversally etched conductive film of the PDLC film; and
iii)a transparent polymer binder.

7. Use of the PDLC shutter rigid transparent substrate device according to claim 6 for interior and exterior glazing.

## Patentansprüche

1. Eine Verschlussvorrichtung aus einem polymerdispergierten Flüssigkristall, PDLC, umfassend:
i) eine PDLC-Folie, bestehend aus
- einer in Längsrichtung geätzten leitfähigen Folie und einer in Querrichtung geätzten leitfähigen Folie, die im Wesentlichen parallel zueinander angeordnet sind, und
- einem PDLC, das sich zwischen der längs geätzten leitfähigen Folie und der quer geätzten leitfähigen Folie befindet;
ii)mindestens eine modulare Längsschaltung (10), umfassend
- mindestens eine leitfähige Ausgangsanschlussfläche (11), die jeweils mit zwei Transistoren (23) verbunden ist, wobei die mindestens eine leitfähige Ausgangsanschlussfläche (11) durch ein Drahtgeflecht mit einer jeweiligen leitfähigen Sammelschiene (12) verbunden ist, die mit jedem Streifen verbunden ist, und wobei die mindestens eine leitfähige Ausgangsanschlussfläche (11) einzeln mit jedem Streifen verbunden ist, wobei ein Streifen der Bereich ist, der sich zwischen zwei geätzten Linien der in Längsrichtung geätzten leitfähigen Folie der PDLC-Folie befindet; und
- mindestens einen Anfangsverbinder (13) und mindestens einen Endverbinder (14);
iii) mindestens eine modulare Querschaltung (15), umfassend
- mindestens eine leitfähige Ausgangsanschlussfläche (11), die jeweils mit zwei Transistoren (23) verbunden ist, wobei die mindestens eine leitfähige Ausgangsanschlussfläche (11) durch ein Drahtgeflecht mit einer jeweiligen leitfähigen Sammelschiene (12) verbunden ist, die mit jedem Streifen verbunden ist, und wobei die mindestens eine leitfähige Ausgangsanschlussfläche (11) einzeln mit jedem Streifen verbunden ist, wobei ein Streifen der Bereich ist, der sich zwischen zwei geätzten Linien der in Querrichtung geätzten leitfähigen Folie der PDLC-Folie befindet, und wobei die Transistoren (23) angepasst sind, um die Stromversorgung und die Daten zu steuern, die jedem Streifen über die leitfähige Ausgangsanschlussfläche (11) zugeführt werden;
- mindestens einen Anfangsverbinder (13) und mindestens einen Endverbinder (14);
iv) mindestens eine schwenkbare Modulschaltung (16), umfassend
- mindestens einen Anfangsverbinder und mindestens einen Endverbinder, die konfiguriert sind, um modulare Längs- und Querschaltungen zu verbinden;
v) mindestens eine Endverbinder-Modulschaltung (22), die mit der letzten der mindestens einen modularen Längsschaltung (10) oder mit der letzten der mindestens einen modularen Querschaltung (15) verbunden ist;
vi) mindestens ein Stromversorgungsanschluss (17) und mindestens eine Datenendeinrichtung (18), die beide mit der Endverbinder-Modulschaltung (22) verbunden sind;
vii) eine elektronische Steuerkonsole (19) zum Betreiben der in Längs- und Querrichtung konvertierbaren PDLC-Verschlussvorrichtung, umfassend
- ein Stromversorgungskabel (20), das an den Stromversorgungsanschluss (17) angeschlossen ist, und
- ein Datenkabel (21), das mit dem Datenanschluss (18) verbunden ist; und
wobei der PDLC-Verschluss in der Lage ist, an jedem Schnittpunkt der Streifen eine Opazität oder Transparenz zu erzeugen.

2. Eine PDLC-Verschlussvorrichtung nach Anspruch 1, wobei das PDLC nematisch ist.

3. Eine PDLC-Verschlussvorrichtung nach einem der Ansprüche 1 bis 2, wobei die in Längsrichtung geätzte leitfähige Folie gleich oder mehr als 2 m breit und gleich oder mehr als 200 m lang ist.

4. Eine PDLC-Verschlussvorrichtung nach einem der Ansprüche 1 bis 3, wobei die in Längsrichtung geätzte leitfähige Folie gleich oder mehr als 2 m breit und gleich oder mehr als 200 m lang ist.

5. Eine PDLC-Verschlussvorrichtung nach einem der Ansprüche 1 bis 4, wobei, wobei die elektronische Steuerkonsole (19) ferner ein Bluetooth-System umfasst.

6. Eine PDLC-Verschlussvorrichtung mit starrem, transparentem Substrat, umfassend:
i) Eine PDLC-Verschlussvorrichtung nach einem der Ansprüche 1 bis 5;
ii) ein starres transparentes Substrat, das im Wesentlichen parallel über der in Längsrichtung geätzten leitfähigen Folie der PDLC-Folie angeordnet ist, und/oder ein starres transparentes Substrat, das im Wesentlichen parallel über der in Querrichtung geätzten leitfähigen Folie der PDLC-Folie angeordnet ist; und
iii)ein transparentes Polymerbindemittel.

7. Verwendung der PDLC-Verschlussvorrichtung mit starrem transparentem Substrat nach Anspruch 6 für Innen- und Außenverglasungen.

## Revendications

1. Dispositif d'obturation à cristaux liquides dispersés dans un polymère ou PDLC, comprenant :
i) un film à cristaux liquides dispersés dans un polymère, comprenant
- un film conducteur gravé longitudinalement et un film conducteur gravé transversalement posés pratiquement en parallèle, et
- un PDLC situé entre le film conducteur gravé longitudinalement et le film conducteur gravé transversalement ;
ii) au moins un circuit modulaire longitudinal (10) comprenant
- au moins un plot de sortie conducteur (11), chacun étant connecté à deux transistors (23), où au moins un plot de sortie conducteur (11) est connecté, par un treillis métallique, à une barre omnibus conductrice respective (12) connectée à chaque bande, et où ce plot de sortie conducteur au minimum (11) est connecté individuellement à chaque bande, une bande étant la zone située entre deux lignes gravées du film conducteur gravé longitudinalement du film de type PDLC ; et
- au moins un connecteur initial (13) et au moins un connecteur terminal (14) ;
iii) au moins un circuit modulaire transversal (15) comprenant
- au moins un plot de sortie conducteur (11), chacun étant connecté à deux transistors (23) où au moins un plot de sortie conducteur (11) est connecté, par un treillis métallique, à une barre omnibus respective (12) connectée à chaque bande, et où ce plot de sortie conducteur au minimum (11) est connecté individuellement à chaque bande, une bande étant la zone située entre deux lignes gravées du film conducteur gravé transversalement du film PDLC, et où les transistors (23) sont adaptés pour contrôler l'alimentation électrique et les données fournies à chaque bande à travers le plot de sortie conducteur (11) ;
- au moins un connecteur initial (13) et au moins un connecteur terminal (14);
iv) au moins un circuit modulaire à pivots (16) comprenant
- au moins un connecteur initial et au moins un connecteur terminal configurés pou connecter des circuits modulaires longitudinaux et transversaux ;
v) au moins un circuit modulaire terminal final (22) connecté au dernier de ce ou ces circuits modulaires longitudinaux (10) ou au dernier de ce ou ces circuits modulaires transversaux ;
vi) au moins une borne d'alimentation électrique (17) et au moins un terminal de données (18), tous deux connectés au circuit modulaire terminal final (22) ;
vii) une console de contrôle électronique (19) pour faire fonctionner le dispositif d'obturation de type PDLC convertible longitudinalement et transversalement, comprenant
- un câble d'alimentation (20) connecté à la borne d'alimentation électrique (17), et
- un câble de données (21) connecté au terminal de données (18); et
où l'obturateur de type PDLC est capable de générer de l'opacité ou de la transparence à chaque intersection des bandes.

2. Un dispositif d'obturation de type PDLC selon la revendication 1, où le PDLC est nématique.

3. Un dispositif d'obturation de type PDLC selon l'une ou l'autre des revendications 1 à 2, où le film conducteur gravé longitudinalement est d'une largeur égale ou supérieure à 2 m et d'une longueur égale ou supérieure à 200 m.

4. Un dispositif d'obturation de type PDLC selon l'une ou l'autre des revendications 1 à 3, où le film conducteur gravé transversalement est d'une largeur égale ou supérieure à 2 m et d'une longueur égale ou supérieure à 200 m.

5. Un dispositif d'obturation de type PDLC selon l'une ou l'autre des revendications 1 à 4, où la console de contrôle électronique (19) comprend également un système Bluetooth.

6. Un dispositif d'obturation de substrat rigide transparent de type PDLC comprenant :
i) un dispositif d'obturation de type PDLC selon l'une ou l'autre des revendications 1 à 5 ;
ii) un substrat rigide transparent posé pratiquement en parallèle par rapport au film conducteur gravé longitudinalement du film de type PDLC et/ou un substrat rigide transparent posé pratiquement en parallèle par rapport au film conducteur gravé transversalement du film de type PDLC ; et
iii)un liant polymère transparent.

7. Utilisation du dispositif d'obturation de substrat rigide transparent de type PDLC selon la revendication 6 pour un vitrage intérieur et extérieur.
